# EUROPEAN PATENT APPLICATION

(11) **EP 1 777 966 A1**
(43) Date of publication of application: **25.04.2007**
(21) Application number: 06002007.0
(22) Date of filing: 01.02.2006
(51) Int. Cl.: H04N 7/26, G06F 9/46

(54) **Decomposition of a H.264-decoder on a playstation**

(30) Priority: 20.10.2005 EP 05022952
(71) Applicant: Siemens Aktiengesellschaft, A German Corporation, 80333 München (DE)
(72) Inventor: Hielscher, Christoh, 80801 München (DE); Scheuer, Axel, 80804 München (DE); Stelzl, Rudolf, 85221 Dachau (DE); Jenzowsky, Stefan, 81243 München (DE); Schweickhardt, Harald, 81479 München (DE); Zweimüller, Boris, 8004 Zürich (CH); Diethelm, Clive, 8052 Zürich (CH)
(74) Representative: Kley, Hansjörg

(57) **Abstract**

The present invention allows an implementation of the H.264 algorithm by a specific decomposition on a computer system, especially a playstation with given limitations. This decomposition provides acceptable pictures for the user community of a playstation with very limited resources.

## Description

This invention relates to a decomposition of a H.264-Decoder on a computer system according to the preamble of claim 1.

The video coding for generic audiovisual services as well as its decoding is specified in the standard ITU-T H.264 [1]. This document ITU-T H.264 [1] is incorporated by reference herein.

The background of the present invention is introduced as follows:
Home entertainment solutions provide services like video-on-demand, TV over IP, and video telephony. The user can access these services by means of a single set-top-box. First however, such a set-top-box needs to be purchased and installed by the user.
Regarding video-on-demand, embodiments of home entertainment system comprises the following components:
   A Myrio Total Manage server 13 administrating the user accounts, the movie management and the billing;
   a nCube video server 11 providing the MPEG2 transport-stream;
   a digital right management 12 provided by the Verimatrix server taking care of the user authentication, and a video-on-demand internet client 14 running on a set-to-box at the user site with a H.264 Video decoder.

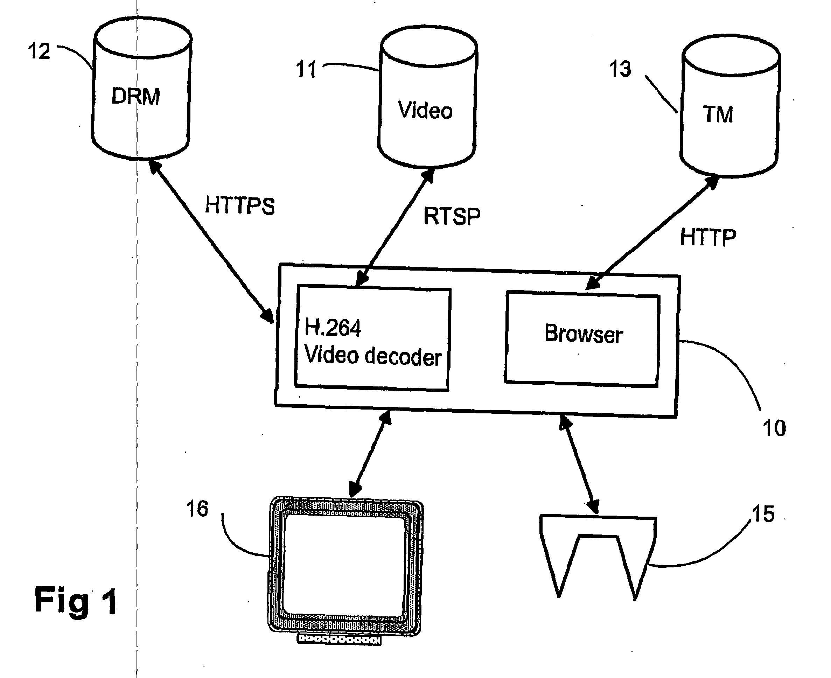

An overall view of some of the afore mentioned components is depicted in figure 1.

In order to reduce the investment on the user side it is an aim not to produce a new set-to-box but to utilize existing third party devices as a platform to access a specific entertainment solution. Sony's Playstation2 (sometimes denoted by «PS2») is an ideal candidate for such a platform because of its widespread use and thanks to its unprecedented user acceptance in the entertainment community. The Playstation PS2 has been sold over 80 million times worldwide.

The crucial part is the implementation of a video-on-demand internet client (VoD-1-client) running on a Playstation PS2. The VoD-T-client is realized as in software only and can easily be deployed on a single compact-disc.

Sony's Playstation PS2 uses a proprietary operating system. This operating system supports neither multiprocessing nor multitasking. Therefore, a VoD-1-client must be realized as a monolithic program. The main software modules of a VoD-I-client are:
A video decoder,
an audio decoder,
a controller and
an user interface.

The video decoder uses the H.264 algorithm. The video decoder must be implemented in a very efficient way to achieve the necessary 25 frames per second on the Hardware components of a playstation, especially Sony's playstation PS2.

The task of the present invention is, to implement the H.264 algorithm by a decomposition in order to provide acceptable pictures for the user community of a playstation with very limited resources.

This critical task is achieved by a decomposition of a H.264 decoder containing a H.264-algorithm according to the features given in claim 1.

The invention allows a decomposition of the H.264 decoder by a special implementation on the hardware components of the playstation with very limited resources such that the computationally intensive parts of the video and audio decoder can run in parallel. This is accomplished by identifying computationally intensive parts of the H.264, by tailoring these parts according to the hardware in use and finally by assigning these parts to dedicated hardware modules of the playstation.

The invention will become apparent upon consideration of the following detailed description of specific embodiments thereof with a reference to a drawing in which:
- Figure 1: representation of the functional main components of a set top box in which a playstation is integrated as well as the components to and from which communication pathes are established;
- Figure 2: block diagram of a playstation;
- Figure 3: representation of the main components of a H.264-decoder and its decomposition on the components on a playstation;

An embodiment of the present invention is now described for a so called PS2 - Playstation of the manufacturer Sony. The invention can be implemented also on other computer systems or playstations with a computer system having about the same restrictions concerning available memory space. In the context of this paper the term «playstation» comprises a «computer system» with defined resources for a specific purpose, that for enabling a user to play with video games. Therefore the term «playstation» is used in synonym manner with the term «computer system».

Figur 1 shows a representation of the functional main components of a set top box in which a playstation is integrated as well as the components to and from which communication paths are established. The playstation 11/12 is integrated in a set top box 10.

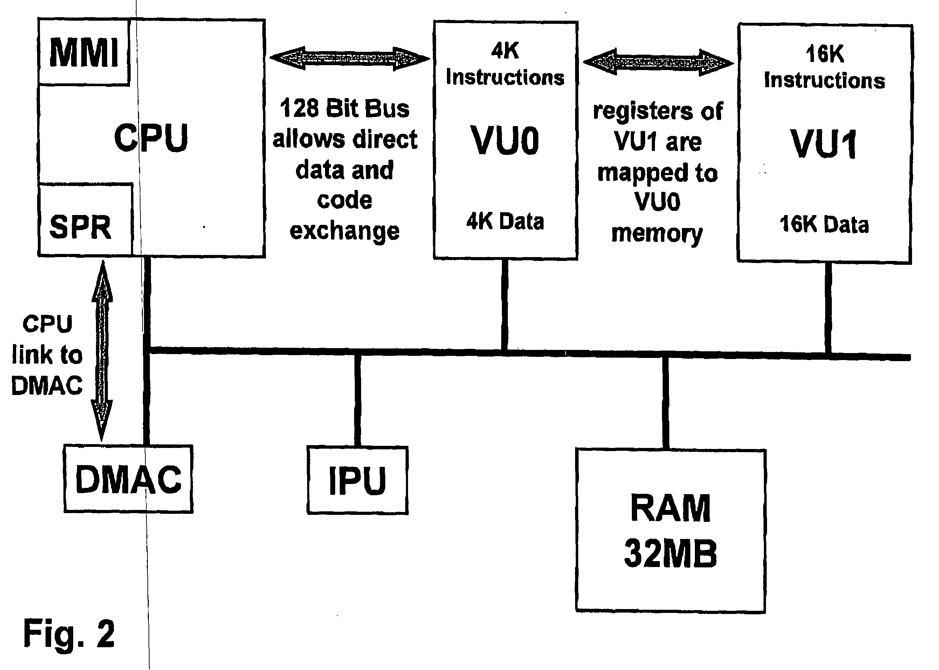

For a better understanding of the invention of a decomposition of the H.264 algorithm attention is drawn to figure 2.

Figure 2 shows the components of a playstation PS2 together with indications concerning its limitations; where
- the first unit VU0 has a data area and a instruction area both of a size of at most 4 kByte;
- the second unit VU1 has a data area and a instruction area both of a size of at most 16 kByte;
- a read/write Memory (RAM) of a capacity of at most 32 Mbyte.

Furthermore a scratch pad RAM is provided of a size of 16 KByte, this memory size is just given as an example.

The fundamental strategy of running a H.264 decoder on a computer system with afore mentioned restrictions is to distribute calculation load between the special units of that computer system, as central processing unit CPU, the two vector units VU0 and VU1 and the graphic synthesizer GS.

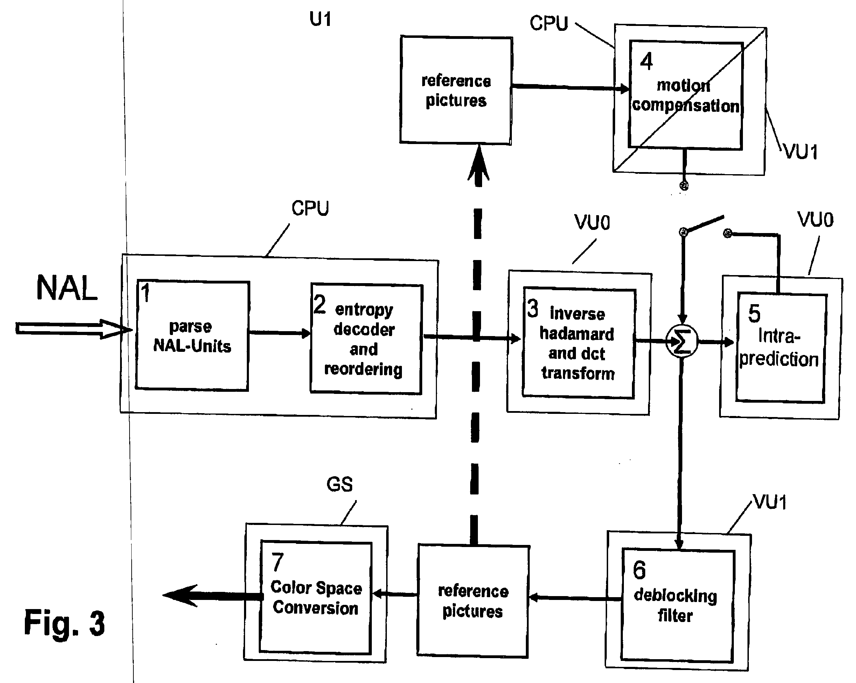

Figure 3 discloses the units and their functions concerning the distribution of the calculation load of a H.264 decoder, a given as follows:
Central processing unit CPU
   Parsing of the input stream
   Entropy decoding
   Preprocessing of data used in steps 3 to 7 of the decoding process
   Initiate DMA transfers of data and code to the vector units
   Control and synchronization of all hardware units
First vector unit VU0
   Inverse discrete cosine transform and Hadamard transformation
   Intra-prediction interpolation
Second vector unit VU1
   Deblocking filter
   interpolation of half- and center pixel positions of the current frame
Graphical synthesizer GS
   Color space conversion, transformation YUV -> RGB
   Display buffer (currently displayed and next frame)

The most efficient way to transfer data from and to the memory and the VU's is based on direct memory access DMA. If the CPU access to data is reduced to the scratch pad ram SPR, the data transfer to the VU's is done with minimum interception of the CPU. A scratch pad ram SPR is here understood as a memory area directly attached to the CPU offering very fast data access, see Fig. 3.

In the following section the concept is described briefly in more detail :
1. The central processing unit CPU gets the data from the network and computes block 1 and block 2 (also called function 1 and 2), the result is saved in the SPR.
2. The residual data are computed (function 3) on VU0 and saved in the SPR. DMA transfers for interprediction are launched to VU1.The data transfer from and to VU0 is done with DMA. Parts of the inter prediction process i.e. quarter pixel interpolation and adding residual data and interpolated data are accelerated on the VU0
3. If a 16x16 block picture row is completed, the deblocking is started according to function 6 in figure 4. Data transfer from and to VU1 is done using direct memory access DMA over SPR.

Remarks on the Data Format used by the Vector Units VU0 and VU1:
As the vector units are only able of executing parallel floating point operations, the picture data have to be converted from 1 byte unsigned integer to 4 byte floating point values. Fortunately, this can be done efficiently with the DMA.controller. The VU converts the floating point data back to 16 bit integer data before handling it back to the CPU, where data is converted to 8 bit with MMI. transfers to and from the Vector Units VU0 and Vu1. The data transfer to and form the Vector Units VU0 and Vu1 is a serious problem which might not allow increasing the performance to full pal resolution. The most efficient way to transfer data from and to the memory and the Vector Units VU0 and Vu1 is based on DMA. If the CPU access to data is reduced to the scratch pad ram (SPR), the data transfer to the Vector Units VU0 and Vu1 is done with minimum interception of the CPU. However, the following problems remain:
   - DMA is reduced to Q-word aligned data blocks resulting especially within the motion compensation (block 4) in an extreme data overhead.
   - DMA transfer between memory and scratch pad ram SPR is fast, data transfer between SPR and the vector units VU0 and Vu1 is about 3 times slower.

The calculation uses the following steps, see figure 4:

### Speed with balancing CPU and VU code

Parts of the motion compensation are transferred to vector unit VU1. It is preferable to restrict the transfer of computational load only to the half-pixel picture interpolation, which in turn is done over the whole picture using the same data as used in the deblocking process (function 6). In addition, the intraprediction (function 5) is transferred to vector unit VU0 requiring direct memory access DMA transfers from and to the SPR.

This before mentioned essential step prevents a large data overhead in the DMA transfers, because data for the interpolation is the save data as for the deblocking filter.

This compromise is possible due to a further code optimization obtained in the meantime: with the help of multi media instructions MMI and a further structural optimization, the execution time of the interpolation functions have been increased by more than a factor of 2.

The detailed decomposition according to a preferred embodiment of the invention is now described together with the indications given in the standard H.264.

| Section in ITU-T H.264 | Decomposition specification |
|---|---|
| 8.1 | Block 1 and 2 in Figure 5 represent functional blocks but not blocks of the CPU. Incoming NAL-Units are to be interpreted by the CPU. Each NAL-Unit has a header, which specifies the type of that NAL-unit. Units containing image data are of type 1 or 2 and decoded in functional block 2. |
| 8.5 | The residual image data is available at the exit of the functional block 2. Residual has the meaning of a difference of image data, which are used by the encoder for the estimation for getting the original image. |
| 8.5.5 | In the functional block 3 «Inverse Hadamard and DCT-Transform» a back transformation and a |
| 8.5.11 | scaling of the residual image data are performed. |
| 8.3 | The functional block 4 handles the computational part of the interprediction process, which is based on the residual image data. The deviation parts have already been built in the functional blocks 1 and 3. |
| 8.4 | In the functional block 4 an interpolation of reference partitions or of reference images is performed. The selection of specific partitions is defined by motion vectors. These motion vectors result also from the before mentioned decoding in the functional block 1 and 2. Block 5 calculates interpolation for intra-predicted frames. |
| 8.7 | In the functional block 6 the deblocking filter |
| 8.7.2.1 | is implemented. |

| | |
|---|---|
| Note: The quoted figures in the afore listed table are figures of ITU-T H.264 and not figures given in this patent paper. | |

### List of reference numerals

- 1: Parse NAL-Units
- 2: Entropy decoder and Reordering
- 3: Inverse Hadamard and DCT-Transform
- 4: Motion Compensation
- 5: Intraprediction, motion compensation
- 6: Deblocking Filter
- 7: Color Space conversion
- 10: Set top Box containing a Playstation 2
- 11: nCube Videoserver
- 12: Digital Right Management authenticating users
- 13: Total Manage server for the functions
accounting,
billing,
film management
- 14: video-on-demand internet client, Myrio Client, Browser
- 15: Spielkonsole
- 16: Television output

### List of acronyms and common abbreviations

- CPU: Central processing unit
- DMAC: Direct Memory Access Controller
- GIF: Graphical Interface
- GS: graphical synthesizer
- IP: Internet Protocol
- IPU: Image Processing Unit
- ITU: International Telecommunication Union
- MMI: Multimedia Instruction
- MPEG: Motion Pictures Experts Group
- NAL: Network abstraction Layer
- RAM: Random Access Memory, read/write memory
- SPR: Scratch pad RAM, cache
- TV: Televison
- VoD-I-client: Video on Demand Internet Client
- VU0: Vector Unit 0, first vector unit
- VU1: Vector Unit 1, second vector unit

### List of cited documents

- [1]: H.264 (03/2005)
Advanced video coding for geric audio visual services ITU-T Telecommunication Stadardization Sector of ITU

## Claims

1. Decomposition of a H.264-Algorithm on a computer system,
where the computer system (CPU, RAM, VU0, VU1) comprises components with the following listed limitations:
- a central processing unit (CPU),
- a first (VU0) and a second vector unit (VU1),
where the first unit (VU0) has a data area and a instruction area both of a size of at most 4 kByte and
where the second unit (VU1) has a data area and a instruction area both of a size of at most 16 kByte,
- a read/write Memory (RAM) of a capacity of at most 32 Mbyte;
- a scratch pad ram (SPR) directly connected to the central processing unit (CPU);
**characterised in that**
- parsing of NAL-Units and there decoding and reordering is carried out by the central processing unit;
- hadamard- and IDC-transformation is carried out by the first vector unit (VU0);
- motion compensation is carried out by the second vector unit (VU1) and the central processing unit (CPU);
- motion intraprediction is carried out by the first vector unit (VU0);
- deblocking filtering is carried out by the second vector unit (VU1).

2. Decomposition of a H.264-Algorithm according to claim 1,
**characterised in that**
the computer system (CPU, RAM, VU0, VU1) is a playstation which is embedded in a set top box.

3. Decomposition of a H.264-Algorithm according to claim 2,
**characterised in that**
the computer system (CPU, RAM, VU0, VU1) is a playstation of the manufacturer Sony.
